# EUROPEAN PATENT SPECIFICATION

(11) **EP 1 160 903 B1**
(45) Date of publication and mention of the grant of the patent: **04.07.2007**
(21) Application number: 01304635.4
(22) Date of filing: 25.05.2001
(51) Int. Cl.: H01M 8/10, H01M 8/02

(54) **Protective membrane-equipped composite electrolyte, method for producing the same, and fuel cell provided with the same**
Kompositelektrolyt mit Schutzmembran, Herstellungsverfahren dafür und Brennstoffzelle mit einem solchen Elektrolyt
Electrolyte composite pourvue d'une membrane protectrice, son procédé de fabrication et pile à combustible comprenant cet électrolyte

(30) Priority: 26.05.2000 JP 2000157191
(43) Date of publication of application: 05.12.2001
(73) Proprietor: HONDA GIKEN KOGYO KABUSHIKI KAISHA, Minato-ku, Tokyo 107-8556 (JP)
(72) Inventor: Akita, Hiroshi,, Wako-shi, Saitama-ken 351-0193 (JP)
(74) Representative: Matthews, Derek Peter

(56) References cited:
- EP-A- 1 020 489
- WO-A-00/44816
- US-A- 5 409 785
- US-A- 5 525 436
- US-A- 6 042 968

## Description

### BACKGROUND OF THE INVENTION

### Field of the Invention:

The present invention relates to a protective membrane-equipped composite electrolyte to be preferably used for an electrochemical cell, especially for a fuel cell, the protective membrane-equipped composite electrolyte comprising a composite electrolyte including a matrix impregnated with a liquid electrolyte, and a surface of the composite electrolyte being coated with a polymer membrane. The present invention also relates to a method for producing the protective membrane-equipped composite electrolyte and a fuel cell provided with the protective membrane-equipped composite electrolyte.

### Description of the Related Art:

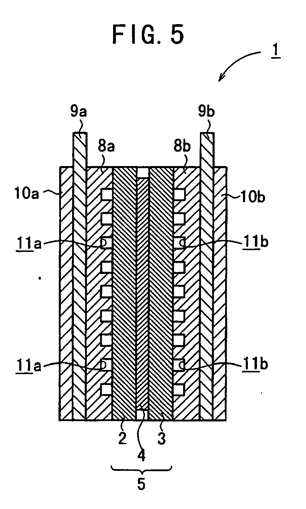

A schematic entire arrangement of a cell unit of a phosphoric acid fuel cell is shown in FIG. 5. The cell unit 1 is provided with an electrolyte-electrode joined unit 5 which is constructed such that an anode electrode 2, a cathode electrode 3, and a composite electrolyte 4 interposed between the both electrodes 2, 3 are joined to one another.

The composite electrolyte 4 generally includes a silicon carbide porous member with fine pores which are impregnated with unillustrated concentrated phosphoric acid (liquid electrolyte). However, another type is also known, in which a polymer film composed of a basic polymer such as polybenzimidazole is impregnated with phosphoric acid or sulfuric acid (see United States Patent No. 5,525,436).

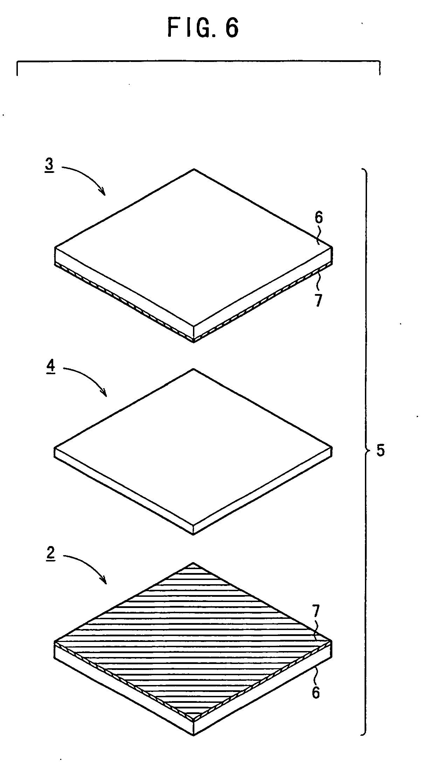

On the other hand, as shown in FIG. 6, each of the anode electrode 2 and the cathode electrode 3 comprises a gas diffusion layer 6 composed of carbon paper, and an electrode catalyst layer 7 including carbon with platinum carried on its surface, the carbon being uniformly laminated on a surface of the gas diffusion layer 6.

The electrolyte-electrode joined unit 5 as described above is interposed between a pair of separators 8a, 8b. Collecting electrodes 9a, 9b are arranged at the outside of the pair of separators 8a, 8b respectively. Further, end plates 10a, 10b are arranged at the outside of the collecting electrodes 9a, 9b respectively (see FIG. 5). The end plates 10a, 10b are connected to one another by the aid of unillustrated bolts. Thus, the electrolyte-electrode joined unit 5, the separators 8a, 8b, and the collecting electrodes 9a, 9b are interposed and held by the end plates 10a, 10b. Gas flow passages 11a, 11b, which are used to supply the fuel gas or the oxygen-containing gas as described later on to the anode electrode 2 or the cathode electrode 3, are formed on the separators 8a, 8b respectively.

The phosphoric acid fuel cell is constructed such that a fuel cell stack (not shown), which is formed by mutually stacking a predetermined number of the cell units 1 having the structure as described above and electrically connecting the cell units 1 in series, is accommodated in a container.

When the phosphoric acid fuel cell constructed as described above is operated, the fuel gas such as the hydrogen-containing gas is firstly supplied to the anode electrode 2 of each of the cell units 1 via the gas flow passage 11a of the separator 8a. On the other hand, the oxygen-containing gas such as the air is supplied to the cathode electrode 3 via the gas flow passage 11b of the separator 8b. The fuel gas and the oxygen-containing gas pass through the gas diffusion layers 6 which constitute the both electrodes 2, 3, and then they arrive at the electrode catalyst layers 7. The hydrogen in the fuel gas causes the reaction represented by the following reaction formula (a) in the electrode catalyst layer 7 of the anode electrode 2. Accordingly, the hydrogen ion and the electron are generated.

H₂ → 2H⁺ + 2e (a)

The generated hydrogen ion is moved to the cathode electrode 3 via the composite electrolyte 4. During this process, the electron is extracted to an external circuit which is electrically connected to the anode electrode 2 and the cathode electrode 3, and it is utilized as DC electric energy to energize the external circuit. After that, the electron arrives at the cathode electrode 3.

The hydrogen ion moved to the cathode electrode 3 and the electron arrived at the cathode electrode 3 via the external circuit cause the reaction represented by the following reaction formula (b) together with the oxygen in the oxygen-containing gas supplied to the cathode electrode 3.

1/20₂ + 2H⁺ + 2e → H₂O (b)

The fuel gas, which is not reacted, is discharged to the outside of the container of the phosphoric acid fuel cell via the gas flow passage 11a of the separator 8a. Similarly, the unreacted oxygen-containing gas and the produced H₂O are discharged to the outside of the container of the phosphoric acid fuel cell via the gas flow passage 11b of the separator 8b.

The state of H₂O in the reaction formula (b) depends on the operation temperature of the phosphoric acid fuel cell. Usually, the phosphoric acid fuel cell is operated in a state in which each of the cell units 1 is held at a temperature of about 140 to 190 °C. In this case, H₂O is produced as a gas, i.e., so-called steam.

On the other hand, for example, when the operation is performed in a state in which each of the cell units 1 is held at a temperature of less than 100 °C, the ratio of H₂O which is produced as liquid (water) is increased. The water stays at the inside of the container of the phosphoric acid fuel cell. For this reason, the phosphoric acid in the composite electrolyte 4 is eluted into the water. The water is finally discharged to the outside of the container via the gas flow passages 11a, 11b. However, the eluted phosphoric acid is also discharged during this process. Therefore, the concentration of phosphoric acid in the composite electrolyte 4 is decreased. As a result, an inconvenience arises such that the cell characteristic of the phosphoric acid fuel cell is deteriorated.

Especially, when the composite electrolyte, which includes the polymer film composed of the basic polymer such as polybenzimidazole impregnated with the phosphoric acid or the like, is used as described in United States Patent No. 5,525,436 referred to above, the polymer film is shrunk in some cases due to the elution of phosphoric acid. If such a situation occurs, the following inconvenience arises. That is, the polymer film is damaged, the fuel gas is leaked to the cathode electrode 3, or the oxygen-containing gas is leaked to the anode electrode 2.

Accordingly, it is conceived that the elution of phosphoric acid is avoided by coating the surface of the composite electrolyte 4 with a protective membrane.

However, in this case, it is impossible to adopt the physical vapor deposition (PVD) method and the chemical vapor deposition (CVD) method which are representative methods for forming the membrane, because of the following reason. That is, when the PVD method is performed, it is necessary to allow a chamber to be in high vacuum after a formation objective for the membrane is arranged in the chamber of a PVD apparatus. However, when the formation objective for the membrane is the composite electrolyte 4 in which the silicon carbide porous member or the polymer film is impregnated with the liquid electrolyte such as phosphoric acid and sulfuric acid, it is extremely difficult to allow the interior of the chamber to be in high vacuum. In order to perform the CVD method, it is necessary to heat the composite electrolyte 4 so that the composite electrolyte 4 is at a high temperature. However, during this process, the liquid electrolyte is volatilized and removed.

Further, it is also impossible to adopt the plating method such as electroplating and electroless plating, because of the following reason. That is, when the composite electrolyte 4 is immersed in a plating bath, the liquid electrolyte is eluted into the plating bath.

As described above, it is extremely difficult to form the protective membrane on the surface of the silicon carbide porous member or the polymer film impregnated with the liquid electrolyte, which has not been achieved yet. On the other hand, it is also conceived that the silicon carbide porous member or the polymer film may be impregnated with the liquid electrolyte after being coated with a protective membrane. However, it is extremely difficult to allow the liquid electrolyte to permeate into the silicon carbide porous member or the polymer film via the protective membrane.

Therefore, when the phosphoric acid fuel cell is operated, the control is made so that the temperature of the cell unit 1 is maintained within the range as described above by heating the cell unit 1 with a heater or the like. However, when the heater or the like is incorporated to construct the phosphoric acid fuel cell, an inconvenience arises such that it is difficult to miniaturize the phosphoric acid fuel cell. Further, when the phosphoric acid fuel cell is operated, it is necessary to apply the electric power to the heater or the like. Therefore, an inconvenience arises such that the operation cost is expensive.

### ADDITIONAL RELEVANT DOCUMENTS

Attention is also directed to WO00/44816 and EP-A-1020489 (both only relevant under Article 54(3) in view of their publication after the claimed priority date), and to US Patents Nos. 6,042,968 and 5,409,785.

### SUMMARY OF THE INVENTION

The present invention has been made in order to solve the various problems as described above, an object of which is to provide a protective membrane-equipped composite electrolyte which makes it possible to avoid any elution of a liquid electrolyte into water even when the water exists in a container of an electrochemical cell, a method for producing the protective membrane-equipped composite electrolyte, and a fuel cell provided with the protective membrane-equipped composite electrolyte.

In order to achieve the object described above, the present invention lies in a protective membrane-equipped composite electrolyte for transporting ions from a first electrode to a second electrode of a pair of electrodes provided for an electrochemical cell, wherein a composite electrolyte, which includes a matrix impregnated with a liquid electrolyte, has a surface coated with a membrane composed of crosslinked polymer.

The seepage of the liquid electrolyte to the outside of the polymer membrane is remarkably suppressed, because the surface is coated with the polymer membrane. Accordingly, it is possible to prevent the liquid electrolyte from eluting into water. That is, the membrane, which is composed of the crosslinked polymer, functions as a protective membrane.

Further, the crosslinked polymer is excellent in heat resistance. Therefore, even when the electrochemical cell is exposed to a high temperature, it is possible to suppress the decrease in protecting ability for the composite electrolyte.

When the matrix is composed of a polymer, the membrane can be obtained by crosslinking the polymer. That is, the membrane, which is composed of a crosslinked polymer, can be formed by crosslinking the matrix itself.

When the liquid electrolyte is any one of phosphoric acid, sulfuric acid, and methanesulfonic acid, the constitutive material for the membrane is preferably a basic polymer having a structural unit derived from a secondary amine monomer, because of the following reason. That is, even when the matrix is composed of any one of a silicon carbide porous member and a polymer, then the basic polymer is attracted by the acidic liquid electrolyte, and it efficiently adheres to the surface of the composite electrolyte. Further, the membrane can be conveniently obtained with ease by crosslinking the basic polymer.

The crosslinking agent for the basic polymer having the structural unit derived from a secondary amine monomer is preferably exemplified by a substance containing two or more isocyanate groups.

In another aspect, the present invention lies in a fuel cell provided with a cell unit comprising an electrolyte-electrode joined unit including the protective membrane-equipped composite electrolyte as described above which is interposed between an anode electrode and a cathode electrode each having a gas diffusion layer and an electrode catalyst layer stacked on the gas diffusion layer.

In this arrangement, the protective membrane-equipped composite electrolyte, which is interposed between the anode electrode and the cathode electrode, plays a role to transport hydrogen ions from the anode electrode to the cathode electrode. Even when any water stays in the container of the fuel cell, it is possible to suppress the elution of the liquid electrolyte into water, because the polymer membrane is formed on the surface of the protective membrane-equipped composite electrolyte. Accordingly, it is possible to avoid any decrease in cell characteristic of the fuel cell.

Further, owing to the arrangement as described above, it is possible to operate the fuel cell at a relatively low temperature. Therefore, it is possible to miniaturize a heater or the like for heating the cell unit, and it is possible to reduce the amount of electric power application to the heater or the like. As a result, it is possible to realize a small size fuel cell, and it is possible to reduce the operation cost for the fuel cell.

Even when the fuel cell is operated at a high temperature, the decrease in protecting ability of the membrane for the composite electrolyte is suppressed, because the membrane composed of crosslinked polymer is excellent in heat resistance.

In still another aspect, the present invention lies in a method for producing a protective membrane-equipped composite electrolyte, comprising the steps of compositing a matrix and a liquid electrolyte by impregnating the matrix with the liquid electrolyte to prepare a composite electrolyte; depositing a crosslinkable polymer onto a surface of the composite electrolyte together with a crosslinking agent; and forming a membrane composed of crosslinked polymer by reacting the crosslinkable polymer and the crosslinking agent with each other.

The production method can be adopted in any case in which the matrix is composed of a silicon carbide porous member or a polymer.

In still another aspect, the present invention lies in a method for producing a protective membrane-equipped composite electrolyte, comprising the steps of compositing a matrix and a liquid electrolyte by impregnating the matrix composed of a polymer with the liquid electrolyte to prepare a composite electrolyte; and forming a membrane composed of crosslinked polymer on a surface of the matrix by crosslinking the polymer for constructing the matrix with a crosslinking agent.

That is, in this case, the polymer for constructing the matrix itself is crosslinked.

To sum up, the membrane (protective membrane), which is composed of the crosslinked polymer, can be formed easily and conveniently without increasing the temperature of the composite electrolyte up to a high temperature in such a degree that the liquid electrolyte is volatilized and removed, by crosslinking the polymer deposited on the surface of the composite electrolyte or the polymer for constructing the matrix itself.

When any one of phosphoric acid, sulfuric acid, and methanesulfonic acid is used as the liquid electrolyte, it is preferable to use a basic polymer having a structural unit derived from a secondary amine monomer, as a constitutive material for the membrane, because of the following reason. That is, as described above, in any case in which the matrix is composed of a silicon carbide porous member or a polymer, the basic polymer is attracted by the acidic liquid electrolyte, and it efficiently adheres to the surface of the composite electrolyte. Further, the membrane can be conveniently obtained with ease by crosslinking the basic polymer.

Preferred examples of the crosslinking agent for crosslinking the basic polymer having the structural unit derived from a secondary amine monomer include a substance containing two or more isocyanate groups as described above.

The above and other objects, features, and advantages of the present invention will become more apparent from the following description when taken in conjunction with the accompanying drawings in which a preferred embodiment of the present invention is shown by way of illustrative example.

### BRIEF DESCRIPTION OF THE DRAWINGS

FIG. 1 shows a schematic entire arrangement of a cell unit of a fuel cell provided with a protective membrane-equipped composite electrolyte according to an embodiment of the present invention;
FIG. 2 shows a schematic sectional view illustrating the protective membrane-equipped composite electrolyte according to the embodiment of the present invention;
FIG. 3 shows a flow chart illustrating a method for producing the protective membrane-equipped composite electrolyte according to a first embodiment;
FIG. 4 shows a flow chart illustrating a method for producing the protective membrane-equipped composite electrolyte according to a second embodiment;
FIG. 5 shows a schematic entire arrangement of a cell unit of a fuel cell provided with a composite electrolyte concerning the conventional technique; and
FIG. 6 shows an exploded perspective view illustrating a composite electrolyte, and an anode electrode and a cathode electrode between which the composite electrolyte is interposed, of the cell unit shown in FIG. 5.

### DESCRIPTION OF THE PREFERRED EMBODIMENTS

The protective membrane-equipped composite electrolyte according to the present invention will be explained in detail below with reference to the accompanying drawings, as exemplified by preferred embodiments in relation to a fuel cell provided with the protective membrane-equipped composite electrolyte. Constitutive components corresponding to the constitutive components shown in FIGS. 5 and 6 are designated by the same reference numerals, detailed explanation of which will be omitted.

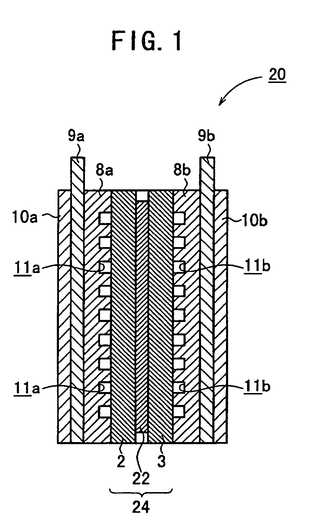

FIG. 1 shows a cell unit 20 of a fuel cell according to an embodiment of the present invention. In the cell unit 20, a protective membrane-equipped composite electrolyte 22 is interposed between an anode electrode 2 and a cathode electrode 3. An electrolyte-electrode joined unit 24 is constructed by joining these components to one another.

The electrolyte-electrode joined unit 24 is interposed between a pair of separators 8a, 8b. Collecting electrodes 9a, 9b are arranged at the outside of the pair of separators 8a, 8b respectively. Further, end plates 10a, 10b are arranged at the outside of the collecting electrodes 9a, 9b respectively. The end plates 10a, 10b are connected to one another by the aid of unillustrated bolts.

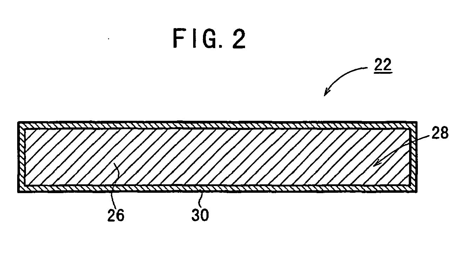

FIG. 2 shows a schematic vertical sectional view illustrating the protective membrane-equipped composite electrolyte 22. As shown in FIG. 2, the protective membrane-equipped composite electrolyte 22 is constructed such that the surface of a composite electrolyte 28 including a matrix 26 impregnated with an unillustrated liquid electrolyte is coated with a protective membrane 30 composed of crosslinked product comprising a crosslinked polymer (hereinafter referred to as "crosslinked product").

The matrix 26 for constructing the composite electrolyte 28 is not specifically limited provided that the matrix 26 can hold the liquid electrolyte while being impregnated at the inside thereof. The matrix 26 may be, for example, a silicon carbide porous member. However, it is preferable that the matrix 26 is a polymer film composed of a basic polymer, because of the following reason. That is, in this arrangement, the protective membrane 30 composed of crosslinked product can be easily formed by crosslinking the surface of the matrix 26 as described later on. The basic polymer, which can hold the liquid electrolyte while being impregnated therewith and which can be easily crosslinked, may be exemplified, for example, those having the structural unit of a monomer of secondary amine as represented by the following chemical formulas (1) to (4).

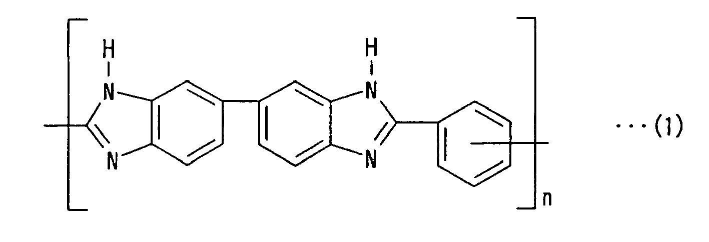

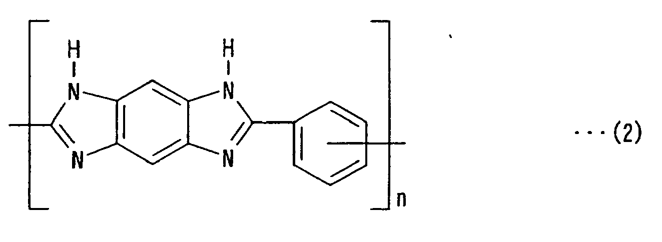

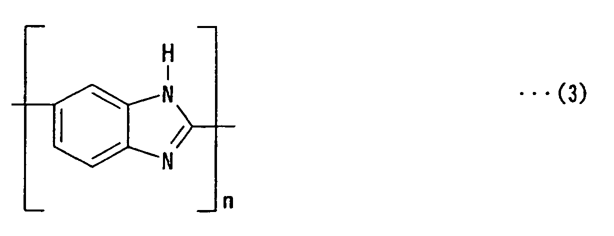

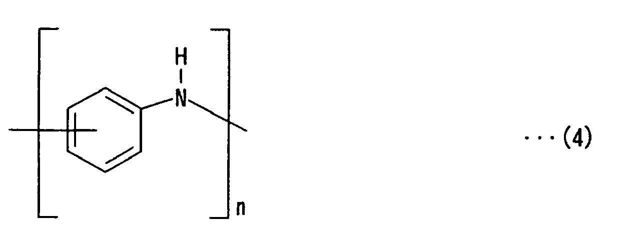

The liquid electrolyte, with which the matrix 26 is impregnated, is not specifically limited provided that it is a liquid having ion conductivity. However, in this case, the cell unit 20 is a power-generating cell for the fuel cell. Therefore, it is preferable to use phosphoric acid, sulfuric acid, or methanesulfonic acid as a liquid electrolyte having hydrogen ion conductivity.

The protective membrane 30 composed of crosslinked product is formed by crosslinking the polymer deposited onto the matrix 26, or it is formed by crosslinking a surface portion of the polymer for constructing the matrix 26. That is, the composite electrolyte 28 is in a form of being coated with the protective membrane 30 composed of crosslinked product. As described later on, the elution of the liquid electrolyte from the matrix 26 is suppressed by the protective membrane 30 composed of crosslinked product. It is needless to say that one which does not disturb the movement of hydrogen ion from the anode electrode 2 to the cathode electrode 3 is selected as the protective membrane 30 composed of crosslinked product.

When the matrix 26 is composed of the basic polymer having the structural unit of the monomer of secondary amine as represented by the chemical formulas (1) to (4), those usable as the crosslinking agent for crosslinking the basic polymer include those containing two or more isocyanate groups (-NCO) in the molecule. The general formulas are shown in the following chemical formulas (5) and (6).

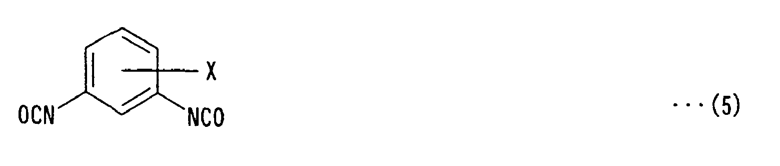

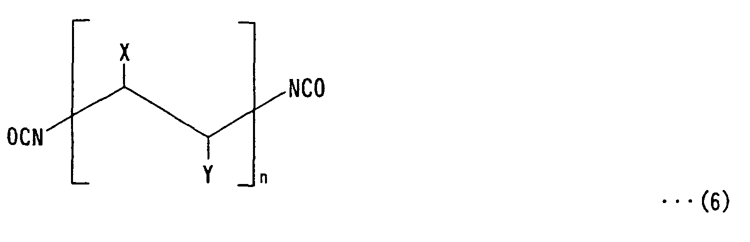

X, Y in the chemical formulas (5) and (6) mutually independently indicate any functional group selected from the group consisting of H, alkyl group, alkoxy group, aryl group, halogen group, and isocyanate group. In the chemical formula (5), the position of X may be any one of 2-position, 4-position, and 5-position with respect to the isocyanate groups (-NCO) positioned at 1-position and 3-position.

Specified examples of the crosslinking agent include, for example, toluidine diisocyanate represented by the following chemical formula (7) and hexamethylene diisocyanate represented by the chemical formula (8). 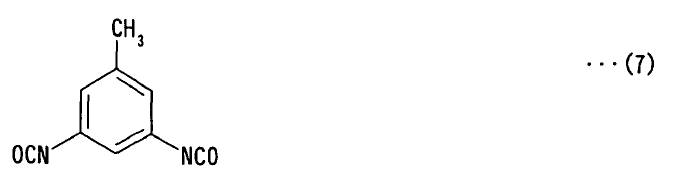 OCN-(CH₂)₆-NCO (8)

For example, when polybenzimidazole represented by the chemical formula (1) is crosslinked with hexamethylene isocyanate represented by the chemical formula (8), the reaction represented by the following reaction formula (c) takes place.

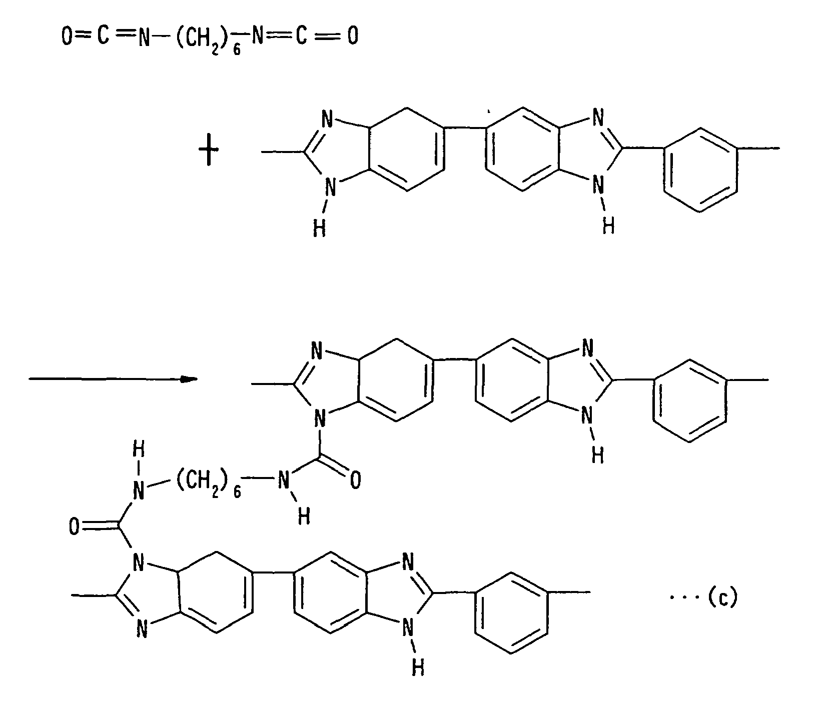

As described above, the movement of hydrogen ion is not inhibited by the protective membrane 30 composed of crosslinked product. Therefore, the cell characteristic of the cell unit 20 is not decreased by interposing the protective membrane-equipped composite electrolyte 22 between the anode electrode 2 and the cathode electrode 3. Further, the crosslinked product as described above is insoluble in water. Therefore, even when any water stays in the container of the phosphoric acid fuel cell, the protective membrane 30 composed of crosslinked product is not dissolved.

The phosphoric acid fuel cell is constructed by stacking the cell units 20 each provided with the protective membrane-equipped composite electrolyte 22 and electrically connecting the cell units 20 in series to prepare a stack which is accommodated in the container.

When the phosphoric acid fuel cell is operated at a temperature less than 100 °C, then the water is produced on the cathode electrode 3 in accordance with the reaction formula (b) described above, and the water stays in the container. The water contacts with the surface of the protective membrane-equipped composite electrolyte 22. However, as described above, the protective membrane-equipped composite electrolyte 22 is constructed as having the protective membrane 30 composed of crosslinked product on its surface. Therefore, the matrix 26 and the liquid electrolyte are prevented from any direct contact with the water. Further, the protective membrane 30 composed of crosslinked product is not dissolved in the water as described above. Accordingly, the elution of the liquid electrolyte impregnated in the matrix 26 into the water is remarkably suppressed.

As described above, in the protective membrane-equipped composite electrolyte 22 having the protective membrane 30 composed of crosslinked product on the surface, even when the water stays in the container of the phosphoric acid fuel cell, the decrease in concentration of the liquid electrolyte is suppressed. Accordingly, it is possible to consequently avoid the decrease in cell characteristic of the phosphoric acid fuel cell. Further, as described above, the protective membrane 30 composed of crosslinked product does not inhibit the passage of the hydrogen ion. Therefore, even when the protective membrane 30 composed of crosslinked product is formed, the decrease in cell characteristic of the cell unit 20 is not caused.

Further, when the cell unit 20 is constructed to possess the protective membrane-equipped composite electrolyte 22, the phosphoric acid fuel cell can be operated at a relatively low temperature, because of the following reason. That is, as described above, the elution of the liquid electrolyte is suppressed in the protective membrane-equipped composite electrolyte 22. Therefore, it is possible to further miniaturize a heater or the like for heating the cell unit 20. In accordance therewith, it is possible to reduce the amount of electric power application to the heater or the like. As a result, it is possible to realize a small size of the fuel cell, and it is possible to reduce the operation cost for the fuel cell.

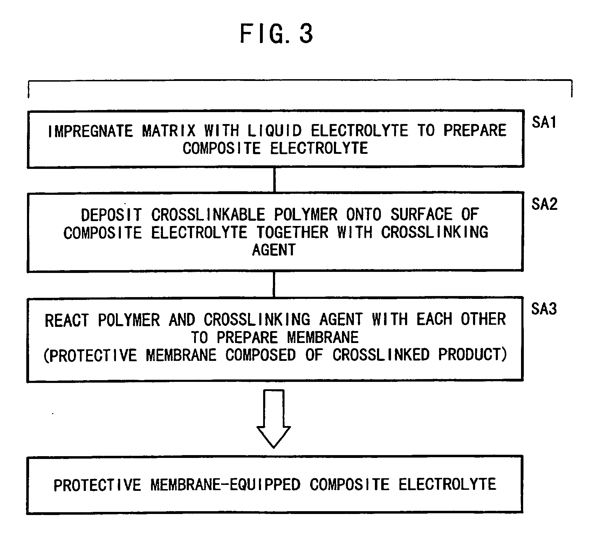

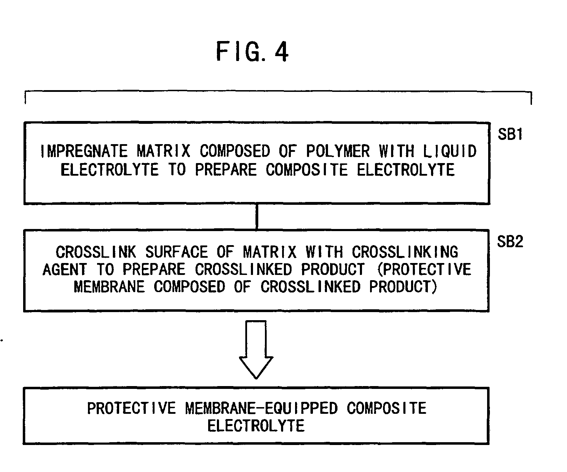

Next, explanation will be made for methods for producing the protective membrane-equipped composite electrolyte 22 with reference to a flow chart thereof shown in FIG. 3 or FIG. 4.

As shown in FIG. 3, the production method according to a first embodiment (hereinafter referred to as "first production method") comprises a step SA1 of impregnating a matrix 26 with a liquid electrolyte to prepare a composite electrolyte 28, a step SA2 of depositing a crosslinkable polymer onto a surface of the composite electrolyte 28 together with a crosslinking agent, and a step SA3 of forming a protective membrane 30 composed of crosslinked product by reacting the polymer and the crosslinking agent with each other. The first production method can be adopted when the matrix 26 is any one of the silicon carbide porous member and the polymer.

At first, in the step SA1, the matrix 26 is impregnated with the liquid electrolyte to prepare the composite electrolyte 28. Specifically, the matrix 26 is immersed in phosphoric acid, sulfuric acid, or methanesulfonic acid. When the matrix 26 is composed of the basic polymer film as described above, the matrix 26 containing phosphoric acid, sulfuric acid, or methanesulfonic acid may be allowed to stand still until the concentration of the liquid electrolyte in the basic polymer film arrives at an equilibrium state.

The composite electrolyte 28 obtained as described above may be dried to such an extent that the liquid electrolyte is not volatilized and removed.

Subsequently, in the step SA2, a crosslinkable polymer is deposited onto the surface of the composite electrolyte 28 together with a crosslinking agent. That is, the composite electrolyte 28 is immersed in an hydrophobic solvent in which the crosslinkable polymer and the crosslinking agent are dissolved.

Those usable as the crosslinkable polymer may be those which allow the hydrogen ion to permeate therethrough and which are insoluble in water. ,Specifically, it is possible to exemplify the polymer having the structural unit of the monomer of secondary amine as represented by the chemical formulas (1) to (4) described above. Such a polymer is attracted to the surface of the composite electrolyte 28, because the liquid electrolyte, with which the matrix 26 is impregnated, is acidic. Therefore, the surface of the composite electrolyte 28 is efficiently coated with the polymer. In this case, it is possible to exemplify, as the crosslinking agent, the substance containing two or more isocyanate groups represented by the general formulas in the chemical formulas (5) and (6).

The reason the hydrophobic solvent is used as the solvent to dissolve the crosslinkable polymer and the crosslinking agent is that the liquid electrolyte is eluted from the composite electrolyte 28 if a hydrophilic solvent is used. Preferred examples of the hydrophobic solvent to dissolve the polymer having the structural unit of the monomer of secondary amine and the substance containing two or more isocyanate groups include liquid hydrocarbons such as n-hexane, ethers such as dimethyl ether and diethyl ether, chlorinated hydrocarbons such as dichloromethane (CH₂Cl₂) and chloroform (CHCl₃), carbon tetrachloride, tetrahydrofuran, and benzene.

It is enough that the immersing time in the step SA2 is in such a degree that the crosslinkable polymer is uniformly deposited onto the surface of the composite electrolyte 28.

Subsequently, in the step SA3, the polymer adhered to the surface of the composite electrolyte 28 is crosslinked. That is, the composite electrolyte 28 is heated to a temperature at which the polymer and the crosslinking agent can be reacted with each other. When the deposited polymer is polybenzimidazole, the mutual reaction is started by allowing the temperature to be 20 to 200 °C. The formation of the protective membrane 30 composed of crosslinked product comprising crosslinked polybenzimidazole is completed for about 30 minutes to 12 hours. The temperature and the time required for causing the mutual reaction are set so that the liquid electrolyte, with which the matrix 26 is impregnated, is not volatilized and removed.

As described above, the protective membrane 30 composed of crosslinked product can be conveniently formed with ease by reacting the polymer and the crosslinking agent with each other after the crosslinkable polymer is deposited onto the surface of the composite electrolyte 28 together with the crosslinking agent. As a result, the protective membrane-equipped composite electrolyte 22 is obtained, in which the surface of the composite electrolyte 28 is coated with the protective membrane 30 composed of crosslinked product.

Next, the second production method will be explained with reference to a flow chart thereof shown in FIG. 4.

The second production method comprises a step SB1 of preparing a composite electrolyte 28 by impregnating a matrix 26 composed of a polymer with a liquid electrolyte, and a step SB2 of preparing a crosslinked product by crosslinking a surface portion of the polymer for constructing the matrix 26 to form a protective membrane 30 composed of crosslinked product. As clearly understood from the above, the second production method can be adopted when the matrix 26 is composed of the polymer.

At first, in the step SB1, the matrix 26 composed of the polymer is impregnated with the liquid electrolyte to prepare the composite electrolyte 28 in accordance with the step SA1 described above. The composite electrolyte 28 obtained as described above may be dried to such an extent that the liquid electrolyte is not volatilized and removed, in the same manner as in the first production method.

Subsequently, in the step SB2, the surface of the polymer for constructing the matrix 26 is crosslinked with the crosslinking agent. That is, the composite electrolyte 28 is immersed in a hydrophobic solvent in which the crosslinking agent is dissolved. For example, when the polymer for constructing the matrix 26 is the basic polymer having the structural unit of the monomer of secondary amine as represented by the chemical formulas (1) to (4) described above, the composite electrolyte 28 may be immersed in the hydrophobic solvent as described above dissolved with the substance containing two or more isocyanate groups represented by the general formulas of the chemical formulas (5) and (6). The reason the hydrophobic solvent is used is the same as that explained in the description of the first production method.

The polymer for constructing the matrix 26 and the crosslinking agent are reacted with each other in accordance with the step SA3 described above. That is, the composite electrolyte 28 is heated to a temperature at which the polymer and the crosslinking agent can be reacted with each other. Of course, also in this case, the temperature and the time required for causing the mutual reaction are set so that the liquid electrolyte, with which the matrix 26 is impregnated, is not volatilized and removed.

As described above, when the matrix 26 is composed of the polymer, the protective membrane 30 composed of crosslinked product can be conveniently formed with ease by reacting the matrix 26 itself and the crosslinking agent with each other. As a result, the protective membrane-equipped composite electrolyte 22 is obtained, in which the surface of the composite electrolyte 28 is coated with the protective membrane 30 composed of crosslinked product.

The first production method has been explained as exemplified by the case in which polybenzimidazole is crosslinked by using, as the crosslinking agent, the substance containing two or more isocyanate groups. However, it is needless to say that the type of the crosslinking agent is selected in conformity with the type of the polymer to be crosslinked.

In this embodiment, the electrochemical cell provided with the protective membrane-equipped composite electrolyte 22 is exemplified by the power-generating cell (cell unit 20) of the phosphoric acid fuel cell. However, there is no special limitation thereto. Another electrochemical cell may be available. The type of the ion which moves in the protective membrane-equipped composite electrolyte 22 can be changed by changing the type of the liquid electrolyte.

### Example 1: Production of protective membrane-equipped composite electrolyte 22

A matrix 26, which was composed of a polybenzimidazole of width: 50 mm x length: 50 mm x thickness: 30 µm, was immersed in phosphoric acid having a concentration of 85 % for not less than 24 hours, after its weight was measured. The concentration of phosphoric acid in the matrix 26 was allowed to arrive at the equilibrium to prepare a composite electrolyte 28 including the matrix 26 impregnated with phosphoric acid. The composite electrolyte 28 was vacuum-dried at 80 °C, and then its weight was measured again. The obtained weight was compared with the weight of the polybenzimidazole film before the immersing procedure to calculate the number of moles of phosphoric acid in the composite electrolyte 28. The number of molecular of phosphoric acid per structural unit of the polybenzimidazole film was calculated to be 10.2 from the obtained number of moles.

On the other hand, 2 g of hexamethylene diisocyanate (crosslinking agent) was dissolved in 50 ml of n-hexane. Subsequently, the composite electrolyte 28 was immersed in this solution for 5 minutes under an environment at 25 °C. Thus, hexamethylene diisocyanate was deposited onto the surface of the composite electrolyte 28.

Subsequently, a heating treatment was applied to the composite electrolyte 28 at 80 °C for 2 hours at the ordinary pressure. Accordingly, n-hexane was removed from the surface of the composite electrolyte 28. Further, polybenzimidazole for constructing the matrix 26 was crosslinked with hexamethylene diisocyanate to obtain a protective membrane-equipped composite electrolyte 22. This product was designated as Working Example 1.

On the other hand, a protective membrane-equipped composite electrolyte 22 was obtained in the same manner as in Example 1 except that 2 g of toluidine dicyanate (crosslinking agent) was dissolved in 50 ml of n-hexane. This product was designated as Working Example 2.

### Example 2: Protecting ability of

### protective membrane-equipped composite electrolyte 22

The protective membrane-equipped composite electrolytes 22 of Working Examples 1 and 2 produced as described above, and a composite electrolyte 4 (Comparative Example) constructed in the same manner as the protective membrane-equipped composite electrolytes 22 except that the protective membrane 30 composed of crosslinked product was not provided on the surface were immersed for 1 minute in 100 ml of deionized water held at 20 °C respectively. After that, the respective samples were taken out from the deionized water, and they were dried at 80 °C for 120 minutes to remove the deionized water. It is needless to say that this test was performed under the condition severer than the condition to which the protective membrane-equipped composite electrolyte 22 would be exposed during the actual operation of the phosphoric acid fuel cell.

The amounts of phosphoric acid (the number of molecules of phosphoric acid per structural unit of polybenzimidazole film) remaining in the protective membrane-equipped composite electrolytes 22 and the composite electrolyte 4 were calculated from the changes of the weights of the protective membrane-equipped composite electrolytes 22 and the composite electrolyte 4 in the test described above. Results are shown in Table 1.

**Table 1**

| Type of electrolyte | Remaining amount of phosphoric acid after being immersed in deionized water |
|---|---|
| Working Example 1 | 2.8 |
| Working Example 2 | 1.8 |
| Comparative Example | 1.0 |

According to Table 1, it is clear that the phosphoric acid-holding ability of each of the protective membrane-equipped composite electrolytes 22 is excellent as compared with the composite electrolyte 4 having no protective membrane 30 composed of crosslinked product. This fact means that the elution of phosphoric acid from the matrix 26 is suppressed by coating the surface of the composite electrolyte 28 with the protective membrane 30 composed of crosslinked product.

As explained above, the seepage of the liquid electrolyte to the outside of the polymer membrane is remarkably suppressed by coating the surface of the composite electrolyte including the matrix impregnated with the liquid electrolyte with the crosslinked polymer membrane (protective membrane composed of crosslinked product). Therefore, it is possible to suppress the decrease in performance of the electrochemical cell such as the fuel cell.

Further, the polymer membrane is excellent in heat resistance. Therefore, even when the electrochemical cell is exposed to a high temperature, it is possible to avoid the decrease in protecting ability for the composite electrolyte.

## Claims

1. A protective membrane-equipped composite electrolyte (22) for transporting ions from a first electrode (2) to a second electrode (3) of a pair of electrodes (2, 3) provided for an electrochemical cell, wherein a composite electrolyte (28), which includes a matrix (26) impregnated with a liquid electrolyte, has a surface coated with a membrane (30) composed of crosslinked polymer.

2. The protective membrane-equipped composite electrolyte (22) according to claim 1, wherein said matrix (26) is composed of a polymer, and said membrane (30) is formed by crosslinking said polymer for constructing said matrix (26).

3. The protective membrane-equipped composite electrolyte (22) according to claim 1 or 2, wherein said liquid electrolyte is any one of phosphoric acid, sulfuric acid, and methanesulfonic acid, and said membrane (30) is composed of a basic polymer having a structural unit derived from a secondary amine monomer.

4. The protective membrane-equipped composite electrolyte (22) according to claim 3, wherein said basic polymer is crosslinked by a crosslinking agent containing two or more isocyanate groups.

5. A fuel cell provided with a cell unit (20) comprising an electrolyte-electrode joined unit (24) including a protective membrane-equipped composite electrolyte (22) which is composed of a matrix (26) impregnated with a liquid electrolyte and which has a surface coated with a crosslinked polymer membrane (30), said protective membrane-equipped composite electrolyte (22) being interposed between an anode electrode (2) and a cathode electrode (3) each having a gas diffusion layer (6) and an electrode catalyst layer (7) stacked on said gas diffusion layer (6).

6. The fuel cell according to claim 5, wherein said matrix (26) for constructing said protective membrane-equipped composite electrolyte (22) is composed of a polymer, and said membrane (30) is formed by crosslinking said polymer for constructing said matrix (26).

7. The fuel cell according to claim 5 or 6, wherein said liquid electrolyte for constructing said protective membrane-equipped composite electrolyte (22) is any one of phosphoric acid, sulfuric acid, and methanesulfonic acid, and said membrane (30) is composed of a basic polymer having a structural unit derived from a secondary amine monomer.

8. The fuel cell according to claim 7, wherein said membrane (30) for constructing said protective membrane-equipped composite electrolyte (22) is formed by crosslinking said basic polymer with a crosslinking agent containing two or more isocyanate groups.

9. A method for producing a protective membrane-equipped composite electrolyte (22), comprising the steps of:
compositing a matrix (26) and a liquid electrolyte by impregnating said matrix (26) with said liquid electrolyte to prepare a composite electrolyte (28);
depositing a crosslinkable polymer onto a surface of said composite electrolyte (28) together with a crosslinking agent; and
forming a membrane (30) composed of crosslinked polymer by reacting said crosslinkable polymer and said crosslinking agent with each other.

10. A method for producing a protective membrane-equipped composite electrolyte (22), comprising the steps of:
compositing a matrix (26) and a liquid electrolyte by impregnating said matrix (26) composed of a polymer with said liquid electrolyte to prepare a composite electrolyte (28); and
forming a membrane (30) composed of crosslinked polymer on a surface of said matrix (26) by crosslinking said polymer for constructing said matrix (26) with a crosslinking agent.

11. The method for producing said protective membrane-equipped composite electrolyte (22) according to claim 9 or 10, wherein any one of phosphoric acid, sulfuric acid, and methanesulfonic acid is used as said liquid electrolyte, and a basic polymer having a structural unit derived from a secondary amine monomer is used as a constitutive material for said membrane (30).

12. The method for producing said protective membrane-equipped composite electrolyte (22) according to claim 11, wherein a substance containing two or more isocyanate groups is used as said crosslinking agent.

## Patentansprüche

1. Kompositelektrolyt mit Schutzmembran (22) zum Transportieren von Ionen von einer ersten Elektrode (2) zu einer zweiten Elektrode (3) eines Elektrodenpaares (2, 3), vorgesehen für eine elektrochemische Zelle, wobei ein Kompositelektrolyt (28), der eine Matrix (26), die mit einem flüssigen Elektrolyt imprägniert ist, umfasst, eine Oberfläche hat, die mit einer Membran (30), die aus vernetztem Polymer zusammengesetzt ist, beschichtet ist.

2. Kompositelektrolyt mit Schutzmembran (22) nach Anspruch 1, wobei die Matrix (26) aus einem Polymer - zusammengesetzt ist und die Membran (30) durch Vernetzen des Polymers gebildet wird, um die Matrix (26) aufzubauen.

3. Kompositelektrolyt mit Schutzmembran (22) nach Anspruch 1 oder 2, wobei der flüssige Elektrolyt irgendeiner von Phosphorsäure, Schwefelsäure und Methansulfonsäure ist und die Membran (30) aus einem basischem Polymer mit einer Struktureinheit, die von einem Monomer mit sekundärem Amin stammt, zusammengesetzt ist.

4. Kompositelektrolyt mit Schutzmembran (22) nach Anspruch 3, wobei das basische Polymer mittels eines Vernetzungsreagenz, das zwei oder mehr Isocyanatgruppen enthält, vernetzt wird.

5. Brennstoffzelle, ausgestattet mit einer Zelleneinheit (20), umfassend eine Elektrolytelektroden-gebundene Einheit (24) umfassend einen Kompositelektrolyt mit Schutzmembran (22), der aus einer Matrix (26) zusammengesetzt ist, die mit einem flüssigen Elektrolyt imprägniert ist und die eine Oberfläche hat, die mit einer vernetzten Polymermembran (30) beschichtet ist, wobei der Kompositelektrolyt mit Schutzmembran (22) zwischen einer Anodenelektrode (2) und einer Kathodenelektrode (3) angeordnet ist, die jeweils eine Gasdiffusionsschicht (6) und eine Elektrodenkatalysatorschicht (7), die auf die Gasdiffusionsschicht (6) gestapelt ist, aufweisen.

6. Brennstoffzelle nach Anspruch 5, wobei die Matrix (26) zum Aufbau 3des Kompositelektrolyts mit Schutzmembran (22) aus einem Polymer zusammengesetzt ist und die Membran (30) durch Vernetzen des Polymers gebildet wird, um die Matrix (26) aufzubauen.

7. Brennstoffzelle nach Anspruch 5 oder 6, wobei der flüssige Elektrolyt zum Aufbau des Kompositelektrolyts mit Schutzmembran (22) irgendeiner von Phosphorsäure, Schwefelsäure und Methansulfonsäure ist, und die Membran (30) aus einem basischem Polymer mit einer Struktureinheit, die von einem Monomer mit sekundärem Amin stammt, zusammengesetzt ist.

8. Brennstoffzelle nach Anspruch 7, wobei die Membran (30) zum Aufbau des Kompositelektrolyts mit Schutzmembran (22) durch Vernetzen des basischen Polymers mit einem Vernetzungsreagenz gebildet wird, das zwei oder mehr Isocyanatgruppen enthält.

9. Verfahren zur Herstellung eines Kompositelektrolyts mit Schutzmembran (22), umfassend die Schritte:
Verbinden einer Matrix (26) und eines flüssigen Elektrolyts durch Imprägnieren der Matrix (26) mit dem flüssigen Elektrolyt, um einen Kompositelektrolyt (28) herzustellen;
Aufbringen eines vernetzbaren Polymers auf eine Oberfläche des Kompositelektrolyts (28) zusammen mit einem Vernetzungsreagenz; und
Bilden einer Membran (30), die aus einem vernetzten Polymer zusammengesetzt ist, durch Reaktion des vernetzbaren Polymers und des Vernetzungsreagenz miteinander.

10. Verfahren zur Herstellung eines Kompositelektrolyts mit Schutzmembran (22), umfassend die Schritte:
Verbinden einer Matrix (26) und eines flüssigen Elektrolyts durch Imprägnieren der Matrix (26), die aus einem Polymer zusammengesetzt ist, mit dem flüssigen Elektrolyt, um einen Kompositelektrolyt (28) herzustellen; und
Bilden einer Membran (30), die aus vernetztem Polymer zusammengesetzt ist, auf einer Oberfläche der Matrix (26) durch Vernetzen des Polymers zum Aufbau der Matrix (26) mit einem Vernetzungsreagenz.

11. Verfahren zur Herstellung des Kompositelektrolyts mit Schutzmembran (22) nach Anspruch 9 oder 10, wobei irgendeiner von Phosphorsäure, Schwefelsäure, Methansulfonsäure als flüssiger Elektrolyt verwendet wird und ein basisches Polymer mit einer Struktureinheit, die von einem Monomer mit sekundärem Amin stammt, als ein wesentliches Material für die Membran (30) verwendet wird.

12. Verfahren zur Herstellung des Kompositelektrolyts mit Schutzmembran (22) nach Anspruch 11, wobei eine Substanz, die zwei oder mehr Isocyanatgruppen enthält, als Vernetzungsreagenz verwendet wird.

## Revendications

1. Electrolyte composite équipé d'une membrane protectrice (22) pour transporter des ions d'une première électrode (2) à une seconde électrode (3) d'une paire d'électrodes (2, 3) prévu pour une pile électrochimique, dans lequel un électrolyte composite (28), qui comprend une matrice (26) imprégnée d'un électrolyte liquide, a une surface revêtue d'une membrane (30) composée d'un polymère réticulé.

2. Electrolyte composite équipé d'une membrane protectrice (22) selon la revendication 1, dans lequel ladite matrice (26) est composée d'un polymère, et ladite membrane (30) est formée en réticulant ledit polymère pour construire ladite matrice (26).

3. Electrolyte composite équipé d'une membrane protectrice (22) selon la revendication 1 ou 2, dans lequel ledit électrolyte liquide est l'un quelconque parmi l'acide phosphorique, l'acide sulfurique et l'acide méthanesulfonique, et ladite membrane (30) est composée d'un polymère basique ayant un motif structurel dérivé d'un monomère amine secondaire.

4. Electrolyte composite équipé d'une membrane protectrice (22) selon la revendication 3, dans lequel ledit polymère basique est réticulé par un agent de réticulation contenant deux ou plus groupes isocyanates.

5. Pile à combustible pourvue d'une unité de pile (20) comprenant une unité jointe à un électrolyte-électrode (24) comprenant un électrolyte composite équipé d'une membrane protectrice (22) qui est composée d'une matrice (26) imprégnée d'un électrolyte liquide et qui a une surface revêtue d'une membrane polymère réticulée (30), ledit électrolyte composite équipé d'une membrane protectrice (22) étant interposé entre une électrode anode (2) et une électrode cathode (3) ayant chacune une couche de diffusion de gaz (6) et une couche de catalyseur d'électrode (7) empilée sur ladite couche de diffusion de gaz (6).

6. Pile à combustible selon la revendication 5, dans laquelle ladite matrice (26) pour construire ledit électrolyte composite équipé d'une membrane protectrice (22) est composée d'un polymère, et ladite membrane (30) est formée en réticulant ledit polymère pour construire ladite matrice (26).

7. Pile à combustible selon la revendication 5 ou 6, dans laquelle ledit électrolyte liquide pour construire ledit électrolyte composite équipé d'une membrane protectrice (22) est l'un quelconque parmi l'acide phosphorique, l'acide sulfurique et l'acide méthanesulfonique, et ladite membrane (30) est composée d'un polymère basique ayant un motif structurel dérivé d'un monomère aminé secondaire.

8. Pile à combustible selon la revendication 7, dans laquelle ladite membrane (30) pour construire ledit électrolyte composite équipé d'une membrane protectrice (22) est formée en réticulant ledit polymère basique avec un agent de réticulation contenant deux ou plus groupes isocyanates.

9. Procédé de production d'un électrolyte composite équipé d'une membrane protectrice (22), comprenant les étapes consistant à :
composer une matrice (26) et un électrolyte liquide en imprégnant ladite matrice (26) dudit électrolyte liquide pour préparer un électrolyte composite (28) ;
déposer un polymère réticulable sur une surface dudit électrolyte composite (28) conjointement avec un agent de réticulation ; et
former une membrane (30) composée d'un polymère réticulé en faisant réagir ledit polymère réticulable et ledit agent de réticulation l'un avec l'autre.

10. Procédé de production d'un électrolyte composite équipé d'une membrane protectrice (22), comprenant les étapes consistant à :
composer une matrice (26) et un électrolyte liquide en imprégnant ladite matrice (26) composée d'un polymère dudit électrolyte liquide pour préparer un électrolyte composite (28) ; et
former une membrane (30) composée d'un polymère réticulé sur une surface de ladite matrice (26) en réticulant ledit polymère pour construire ladite matrice (26) avec un agent de réticulation.

11. Procédé de production dudit électrolyte composite équipé d'une membrane protectrice (22) selon la revendication 9 ou 10, dans lequel l'un quelconque parmi l'acide phosphorique, l'acide sulfurique et l'acide méthanesulfonique est utilisé en tant que ledit électrolyte liquide, et un polymère basique ayant un motif structurel dérivé d'un monomère amine secondaire est utilisé comme matériau constitutif pour ladite membrane (30).

12. Procédé de production dudit électrolyte composite équipé d'une membrane protectrice (22) selon la revendication 11, dans lequel une substance contenant deux ou plus groupes isocyanates est utilisé en tant que ledit agent de réticulation.
